# FASCICULE DE BREVET EUROPEEN

(11) **EP 1 183 799 B1**
(45) Date de publication et mention de la délivrance du brevet: **17.09.2003**
(21) Numéro de dépôt: 00938891.9
(22) Date de dépôt: 06.06.2000
(51) Int. Cl.: H04B 10/17

(54) **REGENERATEUR AVEC RESTITUTION D'UNE ONDE PORTEUSE D'UN SIGNAL OPTIQUE**
REGENERATOR MIT WIEDERABGABE EINER OPTISCHEN TRÄGERWELLE
REGENERATOR WITH RECONSTITUTION OF AN OPTICAL SIGNAL CARRIER WAVE

(30) Priorité: 08.06.1999 FR 9907200
(43) Date de publication de la demande: 06.03.2002
(73) Titulaire: ALCATEL, 75008 Paris (FR)
(72) Inventeur: JANZ, Christopher, Nepean Ontario K2H9G8 (CA); BISSESSUR, Hans, F-75014 Paris (FR); DEVAUX, Fabrice, F-92120 Montrouge (FR); CHIARONI, Dominique, F-92160 Antony (FR)
(74) Mandataire: Fournier, Michel Robert Marie
(86) Numéro de dépôt international: FR0001542
(87) Numéro de publication internationale: WO00076094

(56) Documents cités:
- EP-A- 0 602 659
- US-A- 5 781 327
- PATENT ABSTRACTS OF JAPAN vol. 008, no. 179 (P-295), 17 août 1984 (1984-08-17) & JP 59 071028 A (NIPPON DENKI KK), 21 avril 1984 (1984-04-21)

## Description

### Domaine de l'invention

L'invention se situe dans le domaine du traitement d'un signal optique. Plus particulièrement l'invention a pour objet la régénération d'un signal optique de transmission d'information.

### Arrière plan technologique.

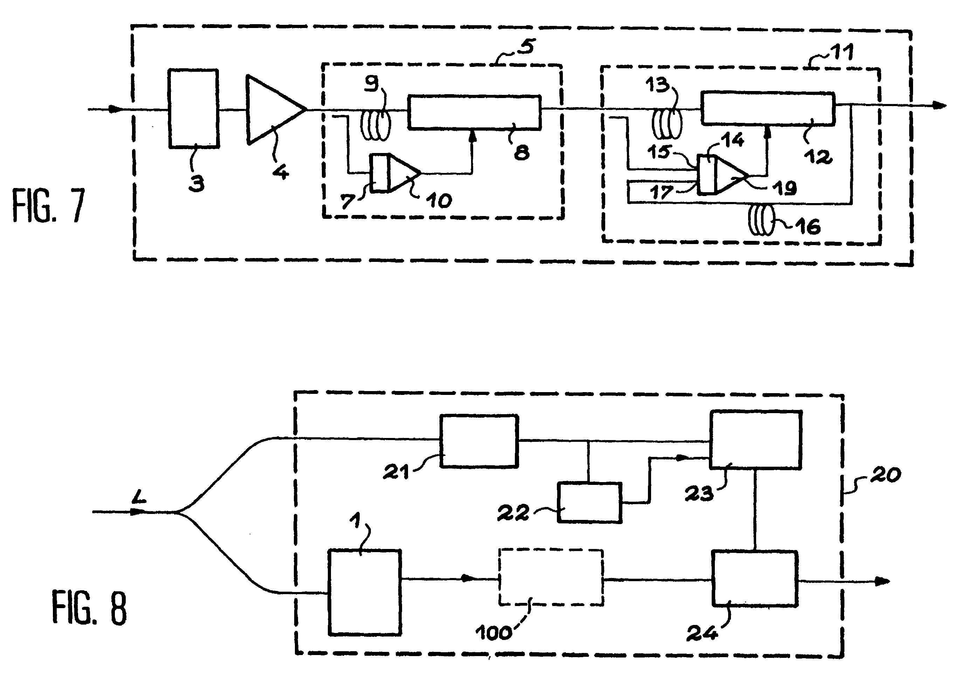

La figure 8 représente de façon très schématique un régénérateur 20 dans lequel est introduit un signal en provenance d'une ligne de transmission L. La fonction du régénérateur est de régénérer le signal en le réamplifiant, le reformant, et en le remettant en phase. Cette fonction est connue sous le nom de reconstitution 3R pour "reamplification, reshaping, retiming". La régénération peut ne comporter que certaine des fonctions de régénération par exemple la remise en forme ou la réamplification. Le régénérateur 20 comporte un détecteur 21 convertissant le signal optique reçu en un signal électrique porteur de la modulation du signal optique, un moyen de reconstitution d'horloge 22 pour reconstituer le signal d'horloge du signal, un moyen 23 de reconstitution de la forme de la modulation du signal reçu par la ligne L, et enfin un modulateur 24, recevant d'une part une onde porteuse en provenance d'un oscillateur local 100 représenté en pointillés et le signal électrique reformé en provenance du moyen 23 de reconstitution de la forme de la modulation du signal reçu par la ligne L pour donné en sortie un signal réémis reconstitué.

On remarque que dans ce dispositif 20 l'onde porteuse du signal ré émis est reconstitué localement et donc qu'elle peut différer de l'onde porteuse initiale par des modifications de caractéristiques telles que la longueur d'onde qui peut être légèrement différente même si les deux longueurs d'onde ont la même valeur nominale, la polarisation, la phase.

Un autre exemple de réalisation est décrit dans le brevet de la demanderesse n° US-A-5 781 326 délivré le 14.07.98 (EP 813 097 A1). L'invention décrite dans ce brevet a pour but de proposer un dispositif de régénération entièrement optique, c'est-à-dire sans conversion optique électrique et inversement.

Le dispositif de mise en forme d'un signal binaire d'entrée ayant la forme d'une première onde optique modulée entre des niveaux bas et hauts de puissance, comporte :
- un premier étage pour fournir, en fonction dudit signal d'entrée, un signal optique modulant ayant la forme d'une seconde onde optique de longueur d'onde déterminée et modulée entre des premiers et des seconds niveaux de puissance, les plus hauts parmi lesdits premiers et seconds niveaux étant stabilisés pour être peu dépendants des fluctuations desdits niveaux bas et hauts du signal d'entrée, et
- un second étage comportant une structure interférométrique couplée audit premier étage pour recevoir ledit signal modulant et conçue de façon à fournir un signal de sortie résultant d'une interférence respectivement constructive ou destructive de première et seconde ondes auxiliaires lorsque la puissance du signal modulant est égale respectivement auxdits premiers ou seconds niveaux.

Chacun des premiers et seconds étages de ce dispositif de mise en forme pourrait être utilisé de façon isolée pour produire un signal de sortie régénéré à partir du signal d'entrée. Les premiers et seconds étages peuvent naturellement être cascadés comme décrits dans ce brevet pour donner un signal régénéré amélioré, c'est-à-dire capable à partir d'un signal d'entrée modulé de mauvaise qualité de fournir un signal de sortie dont les niveaux hauts sont stabilisés avec une puissance optique constante, dont les niveaux bas ont une puissance pratiquement nulle, tout en présentant un rapport signal à bruit très élevé.

Pour une bonne compréhension de l'apport de l'invention dans le dispositif décrit dans ce brevet, chacun des étages du dispositif décrit dans ce brevet est représenté en figure 1 de la présente demande.

Le premier étage est représenté dans une partie A et le second étage est représenté dans une partie B.

Le premier étage 61 reçoit un signal E optique sous forme d'une onde optique continue λe modulée de façon binaire.

Le premier étage 61 comporte un amplificateur optique à fibre 63 recevant le signal d'entrée E et fournissant un signal d'entrée amplifié AE à un dispositif écrêteur 64. Le dispositif écrêteur 64 comporte un amplificateur optique semi-conducteur OA dont une première face est couplée à un oscillateur laser 66 fournissant une onde porteuse intermédiaire L. L'autre face de l'amplificateur OA est reliée à un circulateur 5 comportant un premier et un second ports prévus respectivement pour recevoir de l'amplificateur à fibres 63 le signal d'entrée amplifié AE et l'injecter dans l'amplificateur OA. Un troisième port du circulateur 65 fournit le signal B par l'intermédiaire d'un filtre réjecteur F calé sur la longueur d'onde λe du signal d'entrée E. La longueur d'onde λb de l'onde intermédiaire L est choisie différente de celle du signal E.

Le signal B peut constituer le signal régénéré ou un signal modulant pour le second étage représenté en partie B qui sera maintenant décrit.

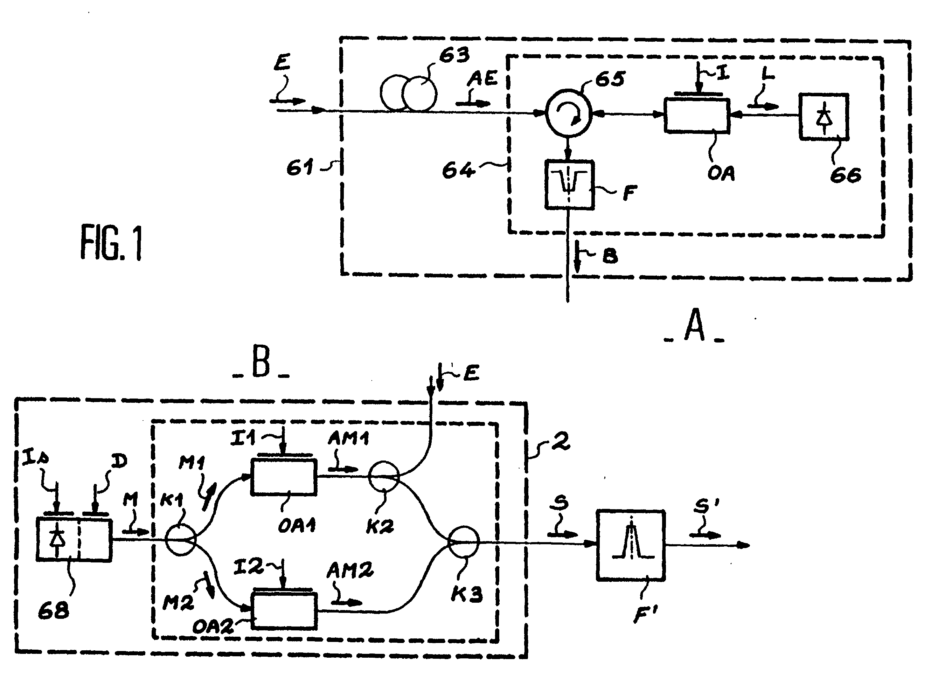

Le second étage 62 du dispositif de la figure 1B comporte une structure interférométrique 67 constituée de deux branches guidantes munies respectivement d'amplificateurs optiques semi-conducteurs OA1 et OA2. Un premier coupleur K1 permet de coupler une extrémité de chacune de ces branches à une source laser 68 fournissant une onde porteuse de sortie M de longueur d'onde λs. Un second coupleur K2 est disposé de façon à permettre l'introduction du signal à régénérer dans le premier amplificateur OA1. Un troisième coupleur K3 relié au coupleur K2 et au second amplificateur OA2 est disposé de façon à fournir un signal de sortie S résultant du couplage d'ondes auxiliaires AM1 et AM2 fournies respectivement par les amplificateur OA1 et OA2. Les ondes AM1 et AM2 correspondent aux ondes M1 et M2 issues du coupleur K1 et amplifiées respectivement par les amplificateurs OA1 et OA2.

Des courants I1 et I2 sont injectés respectivement dans les amplificateurs OA1 et OA2. Selon une première possibilité, ces courants sont ajustés de façon à ce que le signal de sortie S résulte d'une interférence constructive des ondes AM1 et AM2 lorsque la puissance du signal d'entrée est basse et résulte d'une interférence destructive dans le cas contraire.

Selon une autre possibilité, le courant I2 peut être ajusté à une valeur I21 supérieure à I20 pour obtenir une interférence destructive lorsque la puissance du signal d'entrée est faible et constructive lorsqu'elle est élevée.

Que l'on se trouve dans le cas de la figure 1A ou de la figure 1B ou encore dans le cas décrit dans le brevet précité, où le signal B constitue le signal d'entrée du dispositif représenté en partie B, la longueur d'onde de sortie est, comme dans le dispositif décrit, en liaison avec la figure 8, différente de l'onde d'entrée λe. De même, 1a polarisation et la phase de l'onde de sortie présentent des variations par rapport à l'onde d'entrée.

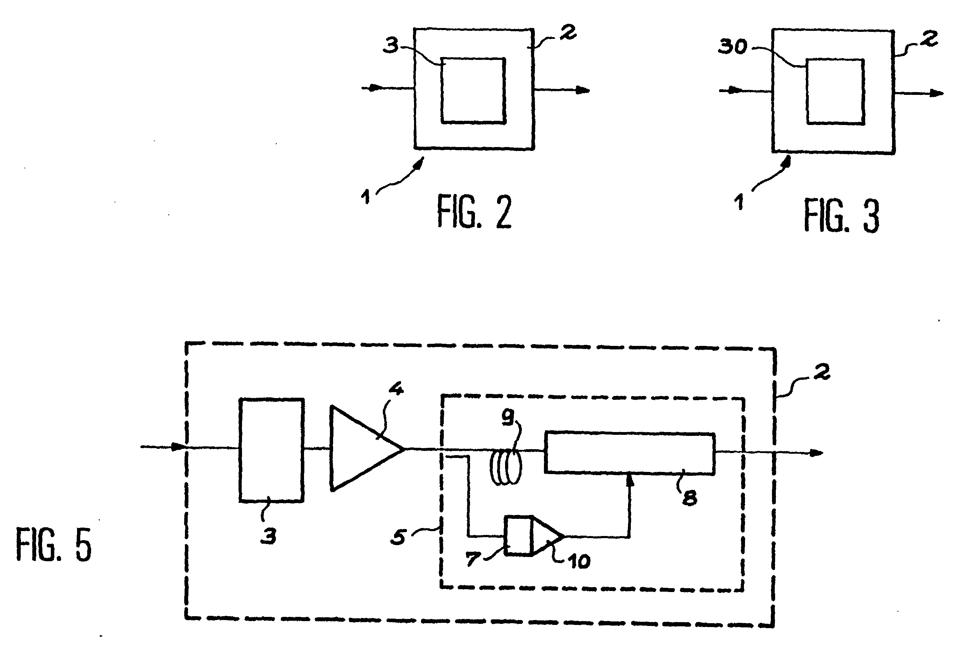

Le brevet US 5 781 327 délivré à TRW inc. décrit un système de modulation électro-optique fonctionnant en boucle fermée. L'onde optique porteuse est générée par un milieu amplificateur optique 12 figures 1 et 5, 32 figure 3. Ce milieu amplificateur est pompé par une onde continue, qui est l'onde continue en sortie du milieu amplificateur ramené en entrée de ce milieu par la boucle.

Ce cycle de la boucle comporte des moyens de modulation 10 de l'onde continue issue du milieu optique amplificateur. La boucle a une sortie de boucle pour l'onde optique modulée. Le cycle de la boucle comporte des moyens de filtrage ou de démodulation pour réduire la largeur de bande de l'onde de pompage. On améliore ainsi l'efficacité optique du dispositif d'ensemble (col. 2, ligne 43). En particulier, on évite de réintroduire dans le modulateur des résonances non souhaitées qui viendraient perturber la modulation (fin de la revendication 1 de ce brevet).

Le milieu optique amplificateur de ce brevet, se comporte ainsi comme un oscillateur local comportant une boucle de réaction ramenant sur l'entrée une partie de la sortie. Ce brevet est cité car il révèle certains moyens de filtrage qui sont utilisés dans l'invention qui sera décrite ci-après.

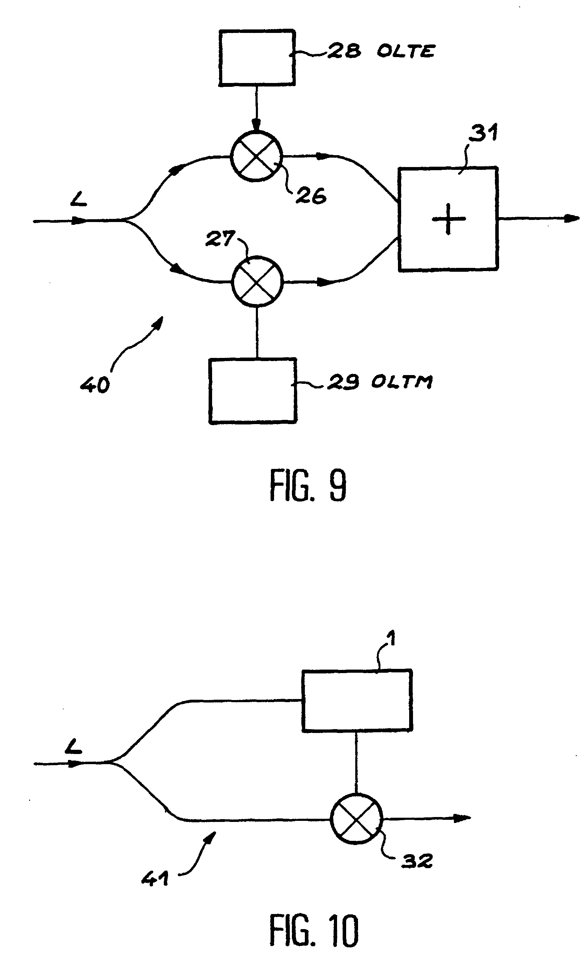

Dans les dispositifs de régénération, les variations de phase, longueur d'onde, ou polarisation due à une génération locale de l'onde de battement peuvent présenter des inconvénients en particulier dans un système de transmission en partition de longueurs d'onde multiplexé, (WDM, wavelength division multiplex). De même, les dispositifs de traitement cohérent de signal optique dans lesquels la polarisation du signal reçu n'est pas connue sont réalisés comme représenté figure 9. Dans le dispositif 40 représenté sur cette figure, pour être sûr qu'un signal arrivant sur une ligne L pourra être mis en battement avec une onde de même longueur d'onde nominale qu'une onde porteuse du signal, on lui injecte à l'aide d'oscillateurs locaux 28, 29 et de mélangeurs 26, 27 respectivement une onde porteuse polarisée TE, et une onde porteuse polarisée TM respectivement. On réalise ainsi une détection du signal porté par l'onde porteuse. Les signaux électriques issus des détecteurs mélangeurs 26, et 27 sont ensuite additionnés de façon connue dans un additionneur 31.

### Brève description de l'invention

L'invention vise à apporter des améliorations à une ligne de transmission, en particulier elle vise à garder constante la longueur d'onde de l'onde porteuse tout au long d'une ligne de transmission. Pour cela selon l'invention on substitue à l'onde continue générée localement par un oscillateur local, une onde continue extraite de l'onde porteuse modulée présente, au niveau d'une entrée d'un régénérateur du signal transmis par ladite ligne de transmission. Si chacun des régénérateurs est conforme à l'invention alors la longueur d'onde de l'onde porteuse initiale est conservée avec sa phase et sa polarisation tout au long de la ligne de transmission. Lorsqu'il est dit que la phase et la polarisation sont conservées on veut dire que le décalage de phase ou de polarisation par rapport à l'onde émise est constant.

Cette conservation présente des avantages dans le cas d'une transmission WDM mais aussi des avantages quant au bruit optique en ligne.

L'invention est ,ainsi relative à un régénérateur de télécommunication optique, le régénérateur ayant :
- une entrée optique pour recevoir en provenance d'un autre régénérateur ou d'une source d'émission éloignée, au travers d'une ligne optique de transmission (L), une onde optique continue, porteuse d'un signal de modulation,
- des moyens de génération d'une onde optique pure,
- un modulateur recevant une modulation représentative de la modulation reçue en entrée, ce modulateur recevant une onde optique pure en provenance des moyens de génération d'une onde optique pure, une sortie du modulateur étant couplée à une sortie du régénérateur,
régénérateur caractérisé en ce que les moyens de génération de l'onde optique pure sont constitués par des moyens d'extraction recevant l'onde optique modulée en provenance dudit autre régénérateur ou de ladite source d'émission éloignée, ces moyens d'extraction traitant cette onde pour reconstituer l'onde porteuse.

Dans leur forme la plus simple, les moyens d'extraction de l'onde porteuse comportent des moyens de filtrage passe-bas recevant le signal modulé et délivrant l'onde optique continue générée par le générateur. Lorsqu'il est parlé de filtre passe haut ou passe bas, il s'agit de fréquences basses ou hautes par rapport à la bande de base du signal porté. Le filtre passe bas pourra être constitué par une cavité de Fabry-Perot dont l'une des fréquences nominales de résonance est égale à la fréquence nominale de l'onde porteuse reçue par le régénérateur, cette cavité recevant le signal modulé et délivrant l'onde optique continue. Selon la nature du signal original et la qualité que l'on veut obtenir pour l'onde porteuse régénérée on pourra aussi prévoir un filtre passe haut recevant l'onde optique en provenance du filtre passe bas, cette onde optique devenant dans ce cas non plus l'onde continue de sortie mais, une première onde continue intermédiaire. Le filtre passe haut élimine des composantes basse fréquence qui pourraient encore être présentes dans cette onde continue intermédiaire. Le signal de sortie du filtre passe haut constitue, dans ce cas, l'onde optique continue générée par les moyens de génération d'une onde optique pure. Il sera vu plus loin que le filtre passe haut peut être constitué par un amplificateur optique à semi-conducteur.

### Brève description des dessins

Des exemples de réalisation et d'utilisation de l'invention ainsi que des résultats d'essais menés avec un dispositif selon l'invention seront maintenant décrits en liaison avec les dessins annexés dans lesquels :
- la figure 1, déjà commentée, comportant les parties A et B représente des exemples de régénérateurs connus ;
- la figure 2 représente la forme la plus simple de réalisation d'un générateur d'onde continue utilisable par l'invention ;
- la figure 3 représente un mode particulier de la forme la plus simple de réalisation du générateur d'onde continue tel que représenté figure 2 ;
- les figures 4 et 5 représentent un mode de réalisation d'un générateur d'onde continue utilisable par l'invention dans lequel un filtre passe haut est monté en série avec le filtre passe bas.

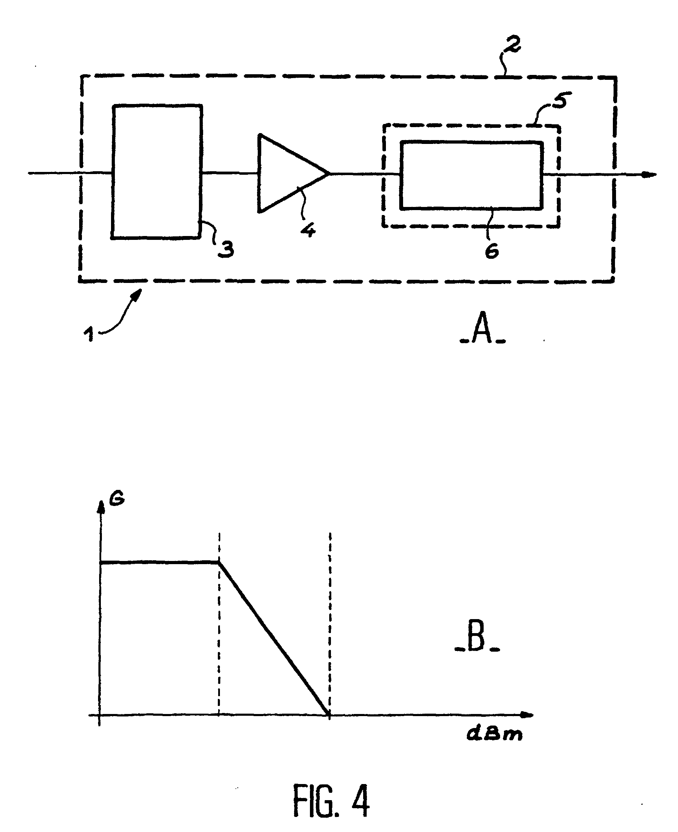

   La figure 4 comprend une partie A représentant schématiquement le dispositif, et une partie B qui est une courbe destinée à expliquer son fonctionnement ;

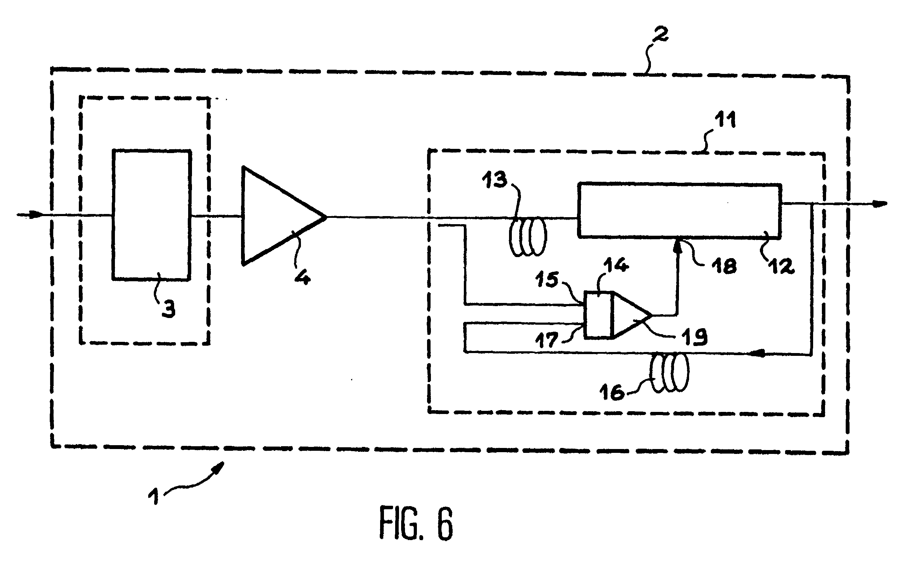

- la figure 6 représente un mode de réalisation d'un générateur d'onde continue utilisable par l'invention dans lequel un filtre de phase est monté en série avec le filtre passe bas ;
- la figure 7 représente un mode de réalisation d'un générateur d'onde continue utilisable par l'invention dans lequel un filtre passe haut puis un filtre de phase sont montés en série en aval du filtre passe bas ;
- la figure 8 déjà partiellement commentée illustre les modifications à apporter à un dispositif connu pour en faire un régénérateur selon l'invention ;
- la figure 9 déjà commentée représente un dispositif, selon l'art antérieur, de génération locale de porteuse comportant des polarisations TE et TM ;
- la figure 10 illustre les modifications à apporter au dispositif connu représenté figure 9 pour lui adjoindre un dispositif selon l'une des figures 2 à 7 ;

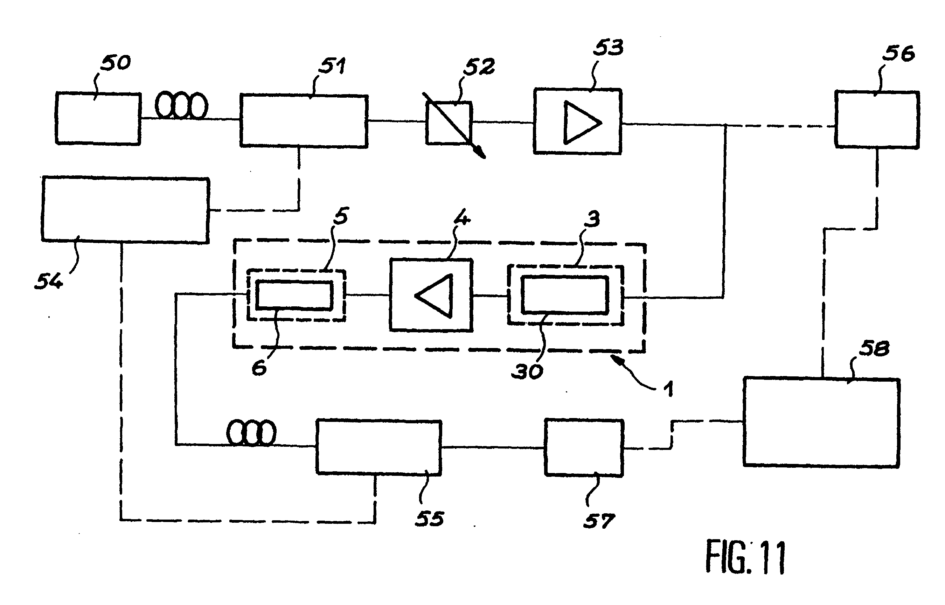

- la figure 11 représente schématiquement un montage expérimental destiné à faire des essais sur l'invention ;

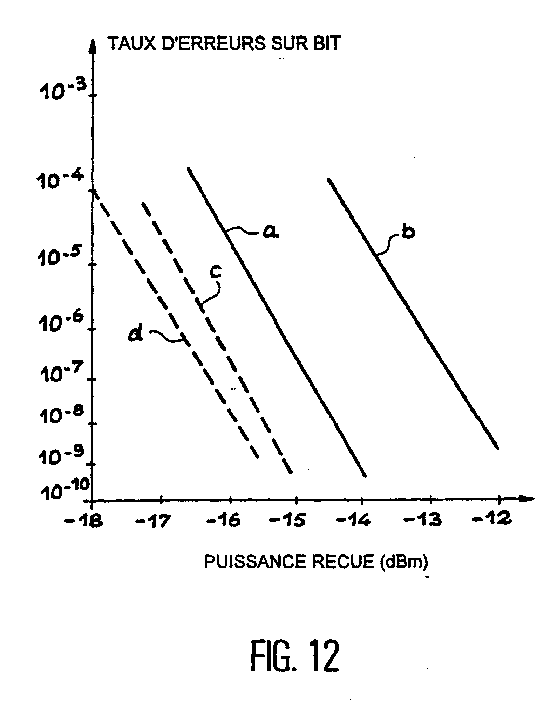

- la figure 12 représente des courbes de résultats d'essais de l'invention réalisés avec le montage expérimental représenté figure 11.

Sur les figures, les éléments ayant même fonction portent le même numéro de référence.

### Descriptions de modes de réalisation de l'invention.

Les figures 2 à 7 représentent un dispositif 1 comportant des moyens (2) d'extraction d'une onde continue pure à partir d'une onde continue portant une modulation reçue sur une entrée du dispositif 1, et provenant d'une source éloignée au travers d'une ligne de transmission L. les moyens 66, 68 de la figure 1,le moyen 100 de la figure 8, et les moyens 26 à 29 et 31 respectivement peuvent avantageusement être remplacés par un dispositif selon l'une des figures 2 à 7. Dans son mode de réalisation le plus simple représenté figure 2, les moyens 2 sont représentés par un filtre passe-bas 3. ce filtre passe-bas peut prendre la forme d'une cavité de Fabry-Perot 30 comme représenté schématiquement figure 3. Cette cavité 30 a l'une de ses fréquences nominales de résonance égale à la fréquence porteuse du signal modulé reçu. Il sera avantageux lorsque le signal reçu est un signal multiplexé en longueur d'onde, de prévoir une cavité dont les fréquences de résonance comprennent plusieurs voire toutes les longueurs d'onde du signal multiplexé. Il est ainsi possible de retrouver en sortie de la cavité chacune des ondes porteuses de signal du signal multiplexé. L'onde porteuse est restituée par le fait que le filtre, par exemple la cavité, ayant une bande passante autour de la porteuse qui est très étroite, seule la porteuse passe. Les composantes fréquentielles introduites par la modulation ne sont pas transmises.

Si toutefois, compte tenu du signal modulé et de la qualité que l'on veut obtenir pour la porteuse, on souhaite filtrer encore la porteuse en sortie du filtre 3, 30 on peut prévoir un filtre passe haut 5, comme représenté sur les figures 4 à 7. Dans ce cas le signal présent en sortie du filtre passe bas 3, 30 ne peut plus être considéré comme l'onde porteuse restituée. Pour des raisons logiques de vocabulaire, les différents signaux qui sont l'onde porteuse sous une forme plus ou moins pure, seront appelés "onde continue intermédiaire". Selon le nombre de dispositifs d'amélioration de cette onde, présents en aval du filtre passe bas 3, 30, on pourra avoir une première onde continue intermédiaire ou une seconde onde continue intermédiaire voire une troisième onde continue intermédiaire. Le filtre passe haut est destiné à éliminer des composantes basses fréquences qui polluent encore la porteuse en sortie du filtre passe bas 3, 30. Deux formes de réalisation de ce filtre ont été représentées, l'une figure 4 et l'autre figure 5. Sous la forme représentée figure 4, le filtre est un amplificateur optique 6, à semi conducteur. Le fonctionnement est explicité par la courbe représentant le gain de l'amplificateur en décibels en fonction de la puissance optique du signal d'entrée représentée en abscisse. Ce gain présente un palier pour une gamme de puissance autour d'une puissance nominale de l'amplificateur puis une décroissance, lorsque la puissance optique d'entrée augmente. Si l'on prend soin de placer, par une amplification préalable convenable, la première onde continue intermédiaire, de tel sorte que son niveau de puissance se situe dans les valeurs de puissance se situant dans les valeurs de décroissance du gain, encadrée par deux lignes verticales pointillées sur la figure 4, partie B, les fluctuations de niveau de la puissance de sortie, seront fortement atténuées voire supprimées. Les forts niveaux de puissance seront peu amplifiés puisque le gain d'amplification sera faible pour eux, par contre les faibles niveaux de puissance seront plus fortement amplifiés, puisqu'ils se situeront dans une zone de gain plus forte. Le niveau de la première onde continue intermédiaire sera donc plus constant ce qui correspond aussi à une fréquence ayant un spectre plus proche de celui d'une onde pure. Ce mode de réalisation présente l'avantage de pouvoir être réalisé sur un seul composant ne réalisant que des traitements optiques du signal. La figure 5 représente un autre mode de réalisation du filtre passe haut situé en aval du filtre passe bas 3, 30. Dans ce mode de réalisation la première onde continue intermédiaire est introduite dans un modulateur électrooptique 8 au travers d'un dispositif retardateur 9. La première onde continue intermédiaire est également reçue dans un détecteur inverseur électro-optique 7. Un signal électrique présent en sortie du détecteur inverseur 7, représentant la modulation résiduelle inverse de celle de la première onde continue intermédiaire est appliqué au modulateur 8. Si le retard 9 est convenablement choisi, c'est à dire s'il est égal au temps nécessaire à la détection dans la boucle comportant le détecteur inverseur 7 et éventuellement un amplificateur 10, la première onde continue intermédiaire est modulée dans le modulateur 8, par un signal électrique en provenance du détecteur 7 qui est en opposition de phase par rapport à la modulation résiduelle de la première onde continue intermédiaire. L'onde continue en sortie du modulateur 8 est ainsi débarrassée de la modulation résiduelle présente en sortie du filtre passe bas 3, 30. On notera qu'avant son introduction dans le filtre passe haut 5 la première onde continue intermédiaire peut ou non être amplifiée au moyen d'un amplificateur 4. De même à sa sortie du détecteur inverseur 7 la première onde continue intermédiaire peut être amplifiée ou non au moyen d'un amplificateur 10. La nécessité de l'un ou de l'autre ou des deux amplificateurs 4 et 10 sera appréciée par l'Homme du métier en fonction du niveau de la première onde continue intermédiaire et des niveaux requis par le modulateur 8 et le détecteur inverseur 7.

Une amélioration de la première onde continue intermédiaire en sortie du filtre passe bas 3, 30 peut aussi être apportée par un filtrage d'une éventuelle modulation résiduelle de phase. Pour cela, et comme représenté en figure 6, un filtre de phase 11 est introduit en aval du filtre passe bas 3, 30. Dans le mode de réalisation représenté à titre d'exemple figure 6, la première onde continue intermédiaire en provenance du filtre passe bas 3, 30 est introduite par l'intermédiaire d'un premier retard 13, par exemple sous forme d'une longueur de fibre optique, dans un modulateur de phase 12. Ce modulateur reçoit un signal de modulation sous la forme d'un signal électrique en provenance d'un comparateur de phase 14. Le comparateur de phase 14 reçoit sur une première entrée 15 la première onde continue intermédiaire et sur une seconde entrée 17, une onde retardée par un second retard 16. Cette onde qui arrive sur la seconde entrée 17 par l'intermédiaire du retard 16, est l'onde de sortie du modulateur 12. Cette onde constitue dans ce cas l'onde optique continue générée par le générateur 1. Le signal électrique de modulation en provenance du comparateur de phase 14 vient moduler en opposition à la modulation de phase résiduelle la première onde continue intermédiaire en sorte qu'en sortie du modulateur 12 cette première onde continue intermédiaire est débarrassée de cette éventuelle modulation résiduelle de phase, et constitue ainsi l'onde continue générée par le générateur 1. Naturellement comme dans le cas du filtre passe haut 5, avant son introduction dans le filtre de phase 11 la première onde continue intermédiaire peut ou non être amplifiée au moyen d'un amplificateur 4. De même à sa sortie du comparateur de phase 14 le signal électrique détecté et inversé en phase peut être amplifié ou non au moyen d'un amplificateur 19. La nécessité de l'un ou de l'autre ou des deux amplificateurs 4 et 19 sera appréciée par l'Homme du métier en fonction du niveau de la première onde continue intermédiaire et des niveaux requis, dans l'exemple représenté figure 6, par le modulateur de phase 12 et le comparateur de phase 14.

Dans le mode de réalisation représenté figure 7, le filtre passe haut 5 tel que représenté par exemple figure 4 A ou 5 est suivi par un filtre de phase 11 tel que représenté par exemple figure 6. Dans ce cas l'onde continue présente en sortie du filtre passe haut 5 devient la seconde onde continue intermédiaire, l'onde continue générée par le générateur 1, étant présente dans ce cas en sortie du filtre de phase 11. Le fonctionnement de chacun des filtres 5, 11 est le même que celui décrit plus haut en liaison avec les figures 4, 5 et 6 respectivement et ne sera pas repris. Le fait de mettre les deux filtres passe haut 5 et de phase 11 en série, débarrasse la première respectivement la seconde onde continue intermédiaire des modulations résiduelles d'amplitude et de phase.

Des exemples d'utilisation d'un générateur d'une onde continue générée par un générateur 1, tel que représenté par exemples sur l'une des figures 2 à 7 seront maintenant commentés en liaison avec les figures 1 et 8 à 10. Dans les régénérateurs représentés en partie A et B de la figure 1, les générateurs d'onde continue 66, 68 peuvent être remplacés par un générateur 1, tel que décrit en liaison avec les figures 2 à 7 conduisant ainsi un régénérateur selon l'invention. La figure 8 déjà commentée représente un autre régénérateur 20, tels que ceux qui sont utilisés en télécommunications optiques, pour régénérer un signal affaiblit par exemple du fait de la distance déjà parcourue. Comme expliqué plus haut ce signal peut être régénéré sous la forme 3R. La ré émission de ce signal nécessite la génération d'une onde porteuse qui, on l'a vu, est créée par un oscillateur local 100 représenté en pointillés. De façon avantageuse l'oscillateur local 100 représenté en pointillés figure 8, pourra être remplacé par un générateur 1 d'une onde continue tel que représenté sur les figures 2 à 7. Le principal avantage apporté par ce remplacement est de conserver exactement la même longueur d'onde pour le signal réémis que la longueur d'onde d'émission du premier émetteur du signal. L'inconvénient éventuel peut provenir du fait que le bruit d'émission spontané présent dans la bande de la porteuse est conservé. On notera cependant qu'il s'agit uniquement du bruit présent dans une bande très étroite autour de la fréquence pure de la porteuse puisque les autres parties du signal reçu par le régénérateur 20 ont été filtrées. Il sera vu plus loin que ce bruit n'augmente pas sensiblement la valeur globale du rapport signal sur bruit.

Un autre exemple d'utilisation sera maintenant commenté en rapport avec les figures 9 et 10. La figure 9 déjà commentée représente une partie 40 d'un dispositif connu destiné à effectuer un traitement sur un signal arrivant sur une ligne L. Il pourrait s'agir typiquement d'une partie d'un récepteur cohérent. Le signal arrivant sur la ligne est constitué par une onde porteuse modulée. Dans ce dispositif pour être sûr qu'un battement de détection pourra être fructueusement réalisé entre une onde produite localement à la longueur d'onde nominale de la porteuse et le signal, le signal est mélangé à deux ondes porteuses l'une TE et l'autre TM, dans deux détecteurs mélangeurs 26, 27, recevant une onde porteuse TE, TM respectivement d'oscillateurs locaux 28, 29 respectivement. Les signaux électriques de détection présent en sortie des mélangeurs 26, 27 respectivement sont ensuite additionnés dans un additionneur 31. Avec quelques précautions connues relatives aux gains des deux détecteurs 26, 27 le signal détecté en sortie de l'additionneur 31 est indépendant des fluctuations de polarisation du signal présent sur la ligne L. Comme représenté figure 10, la partie 40 de dispositif peut avantageusement être remplacée par une partie de dispositif 41 comportant un générateur 1 d'une onde porteuse selon l'une des figures 2 à 7 et un seul détecteur mélangeur 32. Le détecteur mélangeur 32 reçoit le signal modulé en provenance de la ligne L et l'onde porteuse reconstituée générée par le dispositif 1. La différence éventuelle de polarisation entre la polarisation de l'onde porteuse arrivant sur la ligne L et l'onde porteuse reconstituée présente en sortie du dispositif 1 selon l'invention est constante. De la sorte avec addition de moyens connus non représentés placés en amont de l'une des deux entrées du détecteur mélangeur 32, pour compenser la rotation de polarisation, on est sûr que les signaux présent en entrée du détecteur mélangeur 32 ont la même polarisation, et bien sûr la même longueur d'onde.

Des essais d'un régénérateur comportant un générateur 1 seront maintenant commentés en liaison avec les figures 11 et 12. La figure 11 représente schématiquement un montage expérimental destiné à faire des essais sur l'invention. La figure 12 représente des courbes de résultats d'essais de l'invention réalisés avec le montage expérimental représenté figure 11.

En référence à la figure 11 un même générateur 54 d'une séquence binaire pseuo aléatoire est utilisé comme signal de modulation d'une part pour un modulateur 51 faisant partie de ce que l'on peut considérer comme une chaîne émettrice initiale et d'autre part un second modulateur 55 faisant partie d'un dispositif que l'on pourrait considérer comme un régénérateur. Le premier modulateur 51 reçoit une onde porteuse générée par un oscillateur laser semi conducteur à réflecteur distribué (Distributed Feed Back laser). Cette onde porteuse est modulée par le générateur de séquence binaire pseudo aléatoire 54. Le modulateur 51, alimente au travers, d'un atténuateur réglable 52 destiné à simuler un affaiblissement dû à une distance parcourue, et d'un amplificateur 53, un générateur 1 selon l'une des figures 2 à 7, représenté sous forme d'un bloc en pointillés. Dans la configuration utilisée pour les essais le générateur 1 comportait en série un filtre passe bas 3 sous forme d'une cavité de Fabi-Perot 30, un amplificateur 4, et un filtre passe haut 5 sous forme d'un amplificateur optique à semiconducteur 6. L'onde porteuse reconstituée en sortie du générateur 1 alimente le second modulateur 55 et est donc modulée par le signal en sortie du générateur de séquence binaire pseudoaléatoire 54. Les signaux en provenance des modulateurs 51 et 52 sont introduits sur des récepteurs 56, 57 respectivement et les signaux détectés sont comparés dans un détecteur d'erreur 58.

Des taux d'erreurs mesurés font l'objet des courbes a, b, c, et d de la figure 12. Ces courbes représentent le taux d'erreurs entre des signaux en sortie des récepteurs 56 et 57 respectivement et le signal de modulation produit par le générateur de séquence binaire pseudoaléatoire 54. Les courbes a et b représentent les taux d'erreurs en fonction des puissances reçues, sur des signaux présents à la sortie du récepteur 56. Les signaux générés par le générateur de séquence pseudoaléatoire 54 avaient des séquences d'une longueur de (2⁷ - 1) bits et un taux d'extinction optique en sortie du modulateur 51 de 7 dB. Pour la courbe a le rapport signal sur bruit est de 44 dB, il est de 25 dB pour la courbe b. Les valeurs des rapports signal sur bruit indiquées dans ce compte rendu d'essais, sont toujours mesurées pour des largeurs de bande de fréquence correspondant à une variation de longueur d'onde de 0,1 nanomètre autour de la longueur d'onde centrale. Les taux d'erreurs sur bit représentés sur les courbes c et d représentent le taux d'erreurs sur bit pour le signal présent en sortie du récepteur 57, c'est à dire pour un signal utilisant comme porteuse, une porteuse produite par un dispositif 1 selon l'invention tel que représenté figure 11. La courbe c représente le taux d'erreurs sur bit lorsque la porteuse est extraite alors que le rapport signal sur bruit est de 44 dB, la courbe d, alors qu'il est de 25 dB.

Dans les deux cas, le signal généré à l'aide de l'onde porteuse reconstituée avait une sensibilité standard pour le récepteur utilisé de 15,5 dBm environ pour un taux d'erreurs de 10⁻⁹. Ces résultats ont été obtenus avec une puissance suffisante pour faire fonctionner l'amplificateur optique 6 à semiconducteur dans la gamme de puissance d'entrée ou le gain diminue avec la puissance d'entrée.

## Revendications

1. Régénérateur (20) de télécommunication optique, le régénérateur ayant :
- une entrée optique pour recevoir en provenance d'un autre régénérateur ou d'une source d'émission éloignée, au travers d'une ligne optique de transmission (L), une onde optique pure, porteuse d'un signal de modulation,
- des moyens (1, 100) de génération d'une onde optique pure,
- un modulateur (24) recevant une commande de modulation représentative de la modulation reçue en entrée, ce modulateur (24) recevant une onde optique pure en provenance des moyens de génération d'une onde optique pure, une sortie du modulateur (24) étant couplée à une sortie du régénérateur (20),
régénérateur (20) **caractérisé en ce que** les moyens (1) de génération de l'onde optique pure sont constitués par des moyens d'extraction (2) recevant l'onde optique modulée en provenance dudit autre régénérateur ou de ladite source d'émission éloignée, ces moyens (2) d'extraction traitant cette onde pour reconstituer l'onde porteuse.

2. Régénérateur (20) selon la revendication 1 **caractérisé en ce que** les moyens (2) d'extraction de l'onde porteuse comportent des moyens (3) de filtrage passe-bas recevant le signal modulé et délivrant l'onde optique pure générée par les moyens d'extraction (2).

3. Régénérateur selon la revendication 2 **caractérisé en ce que** les moyens (3) de filtrage passe-bas comportent une cavité de Fabry-Perot (30) dont l'une des fréquences nominales de résonance est égale à la fréquence nominale de l'onde porteuse reçue par le générateur, cette cavité (30) recevant le signal modulé et délivrant l'onde optique pure générée par les moyens d'extraction (2).

4. Régénérateur selon l'une des revendications 2 ou 3 **caractérisé en ce que** les moyens d'extraction (2) comporte en outre un filtre (5) passe haut recevant l'onde optique en provenance du filtre (3) passe bas, cette onde optique devenant dans ce cas une première onde pure intermédiaire et éliminant des composantes basse fréquence de cette onde pure intermédiaire , un signal de sortie du filtre passe haut (5) constituant l'onde optique pure générée par les moyens d'extraction (1).

5. Régénérateur (20) selon la revendication 4 **caractérisé en ce que** le filtre (5) passe haut comporte un amplificateur optique (6) à semi-conducteur .

6. Régénérateur (20) selon la revendication 4 **caractérisé en ce que** le filtre (5) passe haut comporte un photo-détecteur inverseur (7) recevant l'onde pure intermédiaire en provenance du filtre passe-bas (3) et délivrant un signal électrique de modulation, un modulateur d'intensité (8) recevant également au travers d'un moyen (9) d'introduction d'un retard l'onde pure intermédiaire en sortie du filtre (3) passe-bas, le signal électrique de modulation en provenance du photo-détecteur inverseur (7), modulant l'onde pure intermédiaire retardée pour produire en sortie du modulateur (8) l'onde optique pure générée par les moyens d'extraction (2).

7. Régénérateur (20) selon la revendication 6 **caractérisé en ce que** le filtre (5) passe haut comporte un premier amplificateur (10) recevant le signal détecté en provenance du photo-détecteur inverseur (7) et délivrant le signal électrique modulant l'onde pure intermédiaire retardée reçue par le modulateur (8).

8. Régénérateur (20) selon l'une des revendications 6 ou 7 **caractérisé en ce que** le filtre (5) passe haut est couplé au filtre (3) passe bas par l'intermédiaire d'un second amplificateur (4) amplifiant l'onde pure intermédiaire en provenance du filtre (3) passe bas.

9. Régénérateur (20) selon l'une des revendications 2 ou 3 **caractérisé en ce que** les moyens d'extraction comporte en outre un filtre (11) de phase recevant l'onde optique en provenance du filtre (3) passe bas, cette onde optique devenant dans ce cas une première onde pure intermédiaire, éliminant de cette première onde pure intermédiaire une modulation résiduelle de phase, et délivrant un signal de sortie du filtre (11) de phase constituant l'onde optique pure générée par les moyens d'extraction (2).

10. Régénérateur (20) selon la revendication 9 **caractérisé en ce que** le filtre (11) de phase comporte un modulateur (12) de phase recevant au travers d'un premier moyen (13) de retard la première onde pure intermédiaire, et délivrant l'onde optique pure générée par les moyens d'extraction (2), un comparateur de phase (14) recevant également sur une première entrée (15) la première onde pure intermédiaire et au travers d'un second moyen (16) de retard, sur une seconde entrée (17), l'onde optique pure générée par les moyens d'extraction (2) et délivrant un signal électrique représentant une modulation de phase, un signal électrique de sortie du détecteur (14) de phase étant couplé à une entrée (18) de modulation du modulateur (12) de phase.

11. Régénérateur (20) selon la revendication 9 **caractérisé en ce que** le filtre (11) de phase comporte en outre un amplificateur (19) recevant le signal électrique en provenance du comparateur (14) de phase, ce comparateur (14) étant couplé au modulateur (12) de phase au travers de cet amplificateur (19).

12. Régénérateur (20) selon l'une des revendications 4 à 8 **caractérisé en ce que** les moyens (2) d'extraction comporte en outre un filtre (11) de phase recevant l'onde optique en provenance du filtre (5) passe haut, cette onde optique devenant dans ce cas une seconde onde pure intermédiaire, le filtre de phase (11) éliminant de cette seconde onde pure intermédiaire une modulation résiduelle de phase, et délivrant un signal de sortie du filtre de phase (11) constituant l'onde optique pure générée par les moyens d'extraction (2).

13. Régénérateur (20) selon la revendication 12 **caractérisé en ce que** le filtre (11) de phase comporte un modulateur de phase (12) recevant au travers d'un premier moyen de retard (13) la seconde onde pure intermédiaire, et délivrant l'onde optique pure générée par les moyens d'extraction (2), un comparateur (14) de phase recevant également sur une première entrée (15) la seconde onde pure intermédiaire et, au travers d'un second moyen (16) de retard, sur une seconde entrée (17), l'onde optique pare générée par les moyens d'extraction (2) et délivrant un signal électrique représentant une modulation de phase, un signal électrique de sortie du comparateur (14) de phase étant couplé à une entrée (18) de modulation du modulateur (12) de phase.

14. Régénérateur (20) selon la revendication 13 **caractérisé en ce que** le filtre (11) de phase comporte en outre un amplificateur (19) recevant le signal électrique en provenance du comparateur (14) de phase, ce comparateur (14) étant couplé au modulateur (12) de phase au travers de cet amplificateur (19).

## Patentansprüche

1. Regenerator (20) für optische Telekommunikation, mit:
einem optischen Eingang zum Empfangen einer von einem anderen Regenerator oder einer entfernten Sendequelle kommenden, ein Modulationssignal tragenden reinen optischen Welle über eine optische Übertragungsleitung (L),
Mitteln (1, 100) zum Erzeugen einer reinen optischen Welle,
einem Modulator (24), der einen für die am Eingang empfangene Modulation repräsentativen Modulationsbefehl empfängt, wobei dieser Modulator (24) eine von den Mitteln zum Erzeugen einer reinen optischen Welle kommende reine optische Welle empfängt und ein Ausgang des Modulators (24) an einen Ausgang des Regenerators (20) gekoppelt ist,
**dadurch gekennzeichnet, dass** die Mittel (1) zum Erzeugen der reinen optischen Welle durch Extraktionsmittel (2) gebildet sind, die die von dem anderen Regenerator oder der entfernten Sendequelle kommende modulierte optische Welle empfangen, wobei diese Extraktionsmittel (2) diese Welle verarbeiten, um die Trägerwelle wiederherzustellen.

2. Regenerator nach Anspruch 1, **dadurch gekennzeichnet, dass** die Mittel (2) zur Extraktion der Trägerwelle Tiefpassfiltermittel (3) aufweisen, die das modulierte Signal empfangen und die von den Extraktionsmitteln (2) erzeugte reine optische Welle liefern.

3. Regenerator nach Anspruch 2, **dadurch gekennzeichnet, dass** die Tiefpassfiltermittel (3) einen Fabry-Perot-Resonator (30) aufweisen, von dem eine der nominellen Resonanzfrequenzen gleich der nominellen Frequenz der von dem Regenerator empfangenen Trägerwelle ist, wobei dieser Resonator (30) das modulierte Signal empfängt und die von den Extraktionsmitteln (2) erzeugte reine optische Welle liefert.

4. Regenerator nach einem der Ansprüche 2 oder 3, **dadurch gekennzeichnet, dass** die Extraktionsmittel (2) ferner ein Hochpassfilter (5) aufweisen, das die von dem Tiefpassfilter (3) kommende optische Welle empfängt, wobei diese optische Welle in diesem Fall eine erste intermediäre reine Welle wird, und das Niederfrequenzkomponenten dieser intermediären reinen Welle beseitigt, wobei ein Ausgangssignal des Hochpassfilters (5) die von den Extraktionsmitteln (1) erzeugte reine optische Welle bildet.

5. Regenerator (20) nach Anspruch 4, **dadurch gekennzeichnet, dass** das Hochpassfilter (5) einen optischen Halbleiterverstärker (6) aufweist.

6. Regenerator (20) nach Anspruch 4, **dadurch gekennzeichnet, dass** das Hochpassfilter (5) einen invertierenden Photodetektor (7), der die von dem Tiefpassfilter (3) kommende intermediäre reine Welle empfängt und ein elektrisches Modulationssignal liefert, und einen Intensitätsmodulator (8) aufweist, der ebenfalls, über ein Mittel (9) zum Erzeugen einer Verzögerung, die vom Tiefpassfilter (3) ausgegebene intermediäre reine Welle, das vom invertierenden Photodetektor (7) kommende elektrische Modulationssignal empfängt und die verzögerte intermediäre reine Welle moduliert, um am Ausgang des Modulators (18) die von den Extraktionsmitteln (2) erzeugte reine optische Welle zu liefern.

7. Regenerator (20) nach Anspruch 6, **dadurch gekennzeichnet, dass** das Hochpassfilter (5) einen ersten Verstärker (10) umfasst, der das vom invertierenden Photodetektor (7) kommende erfasste Signal empfängt und das elektrische Signal liefert, das die von dem Modulator (8) empfangene verzögerte intermediäre reine Welle moduliert.

8. Regenerator (20) nach einem der Ansprüche 6 oder 7, **dadurch gekennzeichnet, dass** das Hochpassfilter (5) an das Tiefpassfilter (3) über einen zweiten Verstärker (4) gekoppelt ist, der die von dem Tiefpassfilter (3) kommende intermediäre reine Welle verstärkt.

9. Regenerator (20) nach einem der Ansprüche 2 oder 3, **dadurch gekennzeichnet, dass** die Extraktionsmittel ferner ein Phasenfilter (11) aufweisen, das die von dem Tiefpassfilter (3) kommende optische Welle empfängt, wobei diese optische Welle in diesem Fall eine erste intermediäre reine Welle wird, das aus dieser ersten intermediären reinen Welle eine Rest-Phasenmodulation beseitigt und ein Ausgangssignal des Phasenfilters (11) liefert, das die von den Extraktionsmitteln (2) erzeugte reine optische Welle darstellt.

10. Regenerator (20) nach Anspruch 9, **dadurch gekennzeichnet, dass** das Phasenfilter (11) einen Phasenmodulator (12), der über ein erstes Verzögerungsmittel (13) die erste intermediäre reine Welle empfängt und die von den Extraktionsmitteln (2) erzeugte reine optische Welle liefert, und einen Phasenkomparator (14) umfasst, der ebenfalls an einem ersten Eingang (15) die erste intermediäre reine Welle und über ein zweites Verzögerungsmittel (16) an einem zweiten Eingang (17) die von den Extraktionsmitteln (2) erzeugte reine optische Welle empfängt und ein elektrisches Signal abgibt, das eine Phasenmodulation darstellt, wobei ein elektrisches Ausgangssignal des Phasendetektors (14) an einen Modulationseingang (18) des Phasenmodulators (12) gekoppelt ist.

11. Regenerator (20) nach Anspruch 9, **dadurch gekennzeichnet, dass** das Phasenfilter (11) ferner einen Verstärker (19) umfasst, der das vom Phasenkomparator (14) kommende elektrische Signal empfängt, wobei dieser Komparator (14) an den Phasenmodulator (12) über diesen Verstärker (19) gekoppelt ist.

12. Regenerator (20) nach einem der Ansprüche 4 bis 8, **dadurch gekennzeichnet, dass** die Extraktionsmittel (2) ferner ein Phasenfilter (11) aufweisen, das die von dem Hochpassfilter (5) kommende optische Welle empfängt, wobei diese optische Welle in diesem Fall eine zweite intermediäre reine Welle wird, das Phasenfilter (11) aus dieser zweiten intermediären reinen Welle eine Rest-Phasenmodulation beseitigt und ein Ausgangssignal des Phasenfilters (11) liefert, das die von den Extraktionsmitteln erzeugte reine optische Welle darstellt.

13. Regenerator (20) nach Anspruch 12, **dadurch gekennzeichnet, dass** das Phasenfilter (11) einen Phasenmodulator (12), der über ein erstes Verzögerungsmittel (13) die zweite intermediäre reine Welle empfängt und die von den Extraktionsmitteln (2) erzeugte reine optische Welle liefert, und einen Phasenkomparator (14) aufweist, der ebenfalls auf einem ersten Eingang (15) die zweite intermediäre reine Welle und, über ein zweites Verzögerungsmittel (16), an einem zweiten Eingang (17) die von den Extraktionsmitteln (2) erzeugte reine optische Welle empfängt und ein elektrisches Signal, das eine Phasenmodulation darstellt, abgibt, wobei ein elektrisches Ausgangssignal des Phasenkomparators (14) an einen Modulationseingang (18) des Phasenmodulators (12) gekoppelt ist.

14. Regenerator (20) nach Anspruch 13, **dadurch gekennzeichnet, dass** das Phasenfilter (11) ferner einen Verstärker (19) aufweist, der das vom Phasenkomparator (14) kommende elektrische Signal empfängt, und wobei dieser Komparator (14) an den Phasenmodulator (12) über diesen Verstärker (19) gekoppelt ist.

## Claims

1. An optical telecommunication regenerator (20) having:
- an optical input for receiving a pure optical wave carrying a modulation signal from another regenerator or from a distant transmission source, via an optical transmission line (L),
- means (1, 100) for generating a pure optical wave, and
- a modulator (24) receiving a modulation command representative of the modulation received at the input, said modulator (24) receiving a pure optical wave from means for generating a pure optical wave, and an output of the modulator (24) being coupled to an output of the regenerator (20),
which regenerator (20) is **characterized in that** the means (1) for generating the pure optical wave consist of extractor means (2) receiving the modulated optical wave from said other regenerator or from said distant transmission source, said extractor means (2) processing said wave to reconstitute the carrier wave.

2. A regenerator (20) according to claim 1 **characterized in that** the means (2) for extracting the carrier wave include low-pass filter means (3) receiving the modulated signal and delivering the pure optical wave generated by the extractor means (2).

3. A regenerator according to claim 2 **characterized in that** the low-pass filter means (3) include a Fabry-Perot cavity (30) of which one nominal resonant frequency is equal to the nominal frequency of the carrier wave received by the generator, said cavity (30) receiving the modulated signal and delivering the pure optical wave generated by the extractor means (2).

4. A regenerator according to either claim 2 or claim 3 **characterized in that** the extractor means (2) further include a high-pass filter (5) receiving the optical wave from the low-pass filter (3), in which case said optical wave is a first intermediate pure wave, and eliminating low-frequency components of said intermediate pure wave, an output signal of the high-pass filter (5) constituting the pure optical wave generated by the extractor means (1).

5. A regenerator (20) according to claim 4 **characterized in that** the high-pass filter (5) includes a semiconductor optical amplifier (6).

6. A regenerator (20) according to claim 4 **characterized in that** the high-pass filter (5) includes an inverter photodetector (7) receiving the intermediate pure wave from the low-pass filter (3) and delivering an electrical modulation signal, an intensity modulator (8) also receiving the intermediate pure wave at the output of the low-pass filter (3) via time-delay means (9), the electrical modulation signal from the inverter photodetector (7) modulating the delayed intermediate pure wave to produce at the output of the modulator (8) the pure optical wave generated by the extractor means (2).

7. A regenerator (20) according to claim 6 **characterized in that** the high-pass filter (5) includes a first amplifier (10) receiving the detected signal from the inverter photodetector (7) and delivering the electrical signal modulating the delayed intermediate pure wave received by the modulator (8).

8. A regenerator (20) according to either claim 6 or claim 7 **characterized in that** the high-pass filter (5) is coupled to the low-pass filter (3) by a second amplifier (4) for amplifying the intermediate pure wave from the low-pass filter (3).

9. A regenerator (20) according to either claim 2 or claim 3 **characterized in that** the extractor means further include a phase filter (11) receiving the optical wave from the low-pass filter (3), in which case said optical wave is a first intermediate pure wave, eliminating residual phase modulation from said first intermediate pure wave, and delivering an output signal of the phase filter (11) constituting the pure optical wave generated by the extractor means (2).

10. A regenerator (20) according to claim 9 **characterized in that** the phase filter (11) includes a phase modulator (12) adapted to receive the first intermediate pure wave via first time-delay means (13) and to deliver the pure optical wave generated by the extractor means (2), a phase comparator (14) is adapted to receive the first intermediate pure wave at a first input (15) and the pure optical wave generated by the extractor means (2) at a second input (17) via second time-delay means (16), and to deliver an electrical signal representing a phase modulation, and an electrical output signal of the phase detector (14) is coupled to a modulation input (18) of the phase modulator (12).

11. A regenerator (20) according to claim 9 **characterized in that** the phase filter (11) further includes an amplifier (19) adapted to receive the electrical signal from the phase comparator (14), said comparator (14) being coupled to the phase modulator (12) by said amplifier (19).

12. A regenerator (20) according to any of claims 4 to 8 **characterized in that** the extractor means (2) further include a phase filter (11) adapted to receive the optical wave from the high-pass filter (5), in which case said optical wave is a second intermediate pure wave, to eliminate residual phase modulation from said second intermediate pure wave, and to deliver an output signal from the phase filter (11) constituting the pure optical wave generated by the extractor means (2).

13. A regenerator (20) according to claim 12 **characterized in that** the phase filter (11) includes a phase modulator (12) adapted to receive the second intermediate pure wave via first time-delay means (13) and to deliver the pure optical wave generated by the extractor means (2), a phase comparator (14) adapted to receive the second intermediate pure wave at a first input (15) and the pure optical wave generated by the extractor means (2) at a second input (17) via second time-delay means (16), and to deliver an electrical signal representing a phase modulation, and an electrical output signal of the phase comparator (14) is coupled to a modulation input (18) of the phase modulator (12).

14. A regenerator (20) according to claim 13 **characterized in that** the phase filter (11) further includes an amplifier (19) adapted to receive the electrical signal from the phase comparator (14), which is coupled to the phase modulator (12) by said amplifier (19).
